# DEMANDE DE BREVET EUROPEEN

(11) **EP 1 612 310 A1**
(43) Date de publication de la demande: **04.01.2006**
(21) Numéro de dépôt: 05291286.2
(22) Date de dépôt: 15.06.2005
(51) Int. Cl.: D04B 1/00

(54) **Procédé de tricotage en déjaugé et article ainsi obtenu**

(30) Priorité: 02.07.2004 FR 0407342
(71) Demandeur: Sara Lee Corporation, Winston-Salem, NC 27105 (US)
(72) Inventeur: Poilly, Jérome, 71450 Blanzy (FR); Bonnin, Michel André, 71400 Autun (FR)
(74) Mandataire: Bertrand, Didier

(57) **Abrégé**

Selon ce procédé de tricotage au déjaugé d'un article textile dans un métier du type à maille cueillies comportant des aiguilles (1) séparées par des platines (4), on tricote l'article avec une aiguille (1) sur deux et l'on a préalablement retiré du métier une platine (4) sur deux. On obtient ainsi des articles tricotés équilibrés.

## Description

La présente invention concerne un procédé de tricotage en déjaugé et l'article ainsi obtenu.

Sur les métiers à tricoter en mailles cueillies, il est connu de « déjauger » le métier (c'est-à-dire travailler à une jauge inférieure à la jauge nominale) pour notamment gagner en consommation de matière et en temps de tricotage ou pour utiliser des fils plus gros.

Dans le cas d'un métier circulaire, la méthode la plus courante consiste à changer le cylindre de la machine. C'est ainsi par exemple que le constructeur Santoni propose d'équiper ses machines 15"(38,1 cm) en 1056 aiguilles d'épaisseur 0,5 mm pour une jauge 22, en 1104 aiguilles d'épaisseur 0,41 mm pour une jauge 24, en 1248 aiguilles d'épaisseur 0,41 mm pour une jauge 26, en 1344 aiguilles d'épaisseur 0,41 mm pour une jauge 28 et en 1488 aiguilles d'épaisseur 0,34 mm pour une jauge 32. Cette méthode est très onéreuse car il faut avoir les ensembles cylindre, couronnes, plateau et scie en stock ; de plus pour effectuer le changement, il faut compter trois jours de travail pour deux techniciens.

L'autre méthode classique consiste à enlever ou à ne pas sélectionner une aiguille sur 2. Par exemple, sur un métier Santoni SM8 15" 1344 aiguilles d'épaisseur 0,41 mm pour une jauge 28, on tricote avec la moitié des aiguilles soit 672 aiguilles. Cette méthode est très rapide, n'entraîne pas de frais et permet de gagner sur la consommation de matière et le temps de cycle de la machine pour réaliser un article équivalent ; mais elle donne un aspect bas de gamme au tricot réalisé. Cet aspect de qualité moindre provient de l'écart dimensionnel important qui existe de ce fait entre la maille et l'entre-maille.

Le but de la présente invention est de tricoter en déjaugé un article de qualité correcte, c'est-à-dire notamment ayant l'aspect d'un tricot équilibré.

L'invention atteint son but grâce à un procédé de tricotage au déjaugé d'un article textile dans un métier du type à mailles cueillies comportant des aiguilles séparées par des platines, procédé du type selon lequel on tricote l'article avec une aiguille sur deux, caractérisé en ce qu'on a préalablement retiré du métier une platine sur deux.

Le fait d'enlever une platine sur deux permet au fil de mieux glisser lors de la formation de la maille pour obtenir une maille et un entre-maille de dimensions équivalentes.

L'invention s'applique à tous les métiers travaillant en mailles cueillies, mais particulièrement avantageusement au métier circulaire.

L'invention concerne aussi l'article obtenu par le procédé de l'invention. L'article obtenu, en particulier sur métier circulaire, peut notamment être utilisé pour la fabrication d'articles sans couture destinés à habiller le tronc (maillots, brassières, soutien-gorge, etc.) ou à habiller les jambes (bas, collants, chaussettes, etc.).

D'autres caractéristiques et avantages de l'invention ressortiront de la description suivante d'un exemple de réalisation. Il sera fait référence aux dessins annexés sur lesquels :
La figure 1 est une vue schématique des mailles en formation sur un métier traditionnel en tricotage normal.
La figure 2 est une vue schématique analogue des mailles en formation sur le même métier en tricotage déjaugé classique.
La figure 3 est une vue schématique analogue des mailles en formation sur le même métier transformé, en tricotage déjaugé conforme à l'invention.
La figure 4 est une vue des mailles d'un tricot déjaugé classique.
La figure 5 est une vue des mailles d'un tricot déjaugé conforme à l'invention.

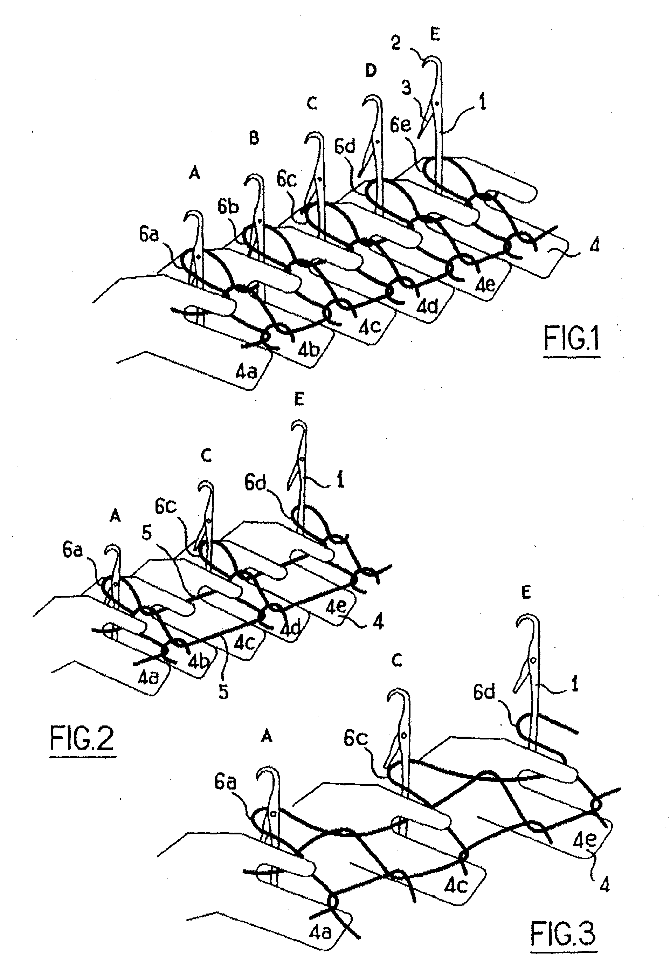

Les figures 1 à 3 représente une partie d'un métier à tricoter en mailles cueillies qui peut être rectiligne (comme représenté pour la simplicité du dessin) ou circulaire. Il comprend classiquement les aiguilles 1, avec leur crochet 2 destiné à cueillir le fil et leur palette mobile 3. Ici les aiguilles sont verticales et séparées par des platines 4.

Dans la figure 1, qui représente le tricotage normal, toutes les aiguilles 1 du métier travaillent, en position A, B, C, D, E, avec leur platine 4a, 4b, 4c, 4d, 4e associée, et forment donc des mailles de fil 6a, 6b, 6c, 6d, et 6e. L'aspect du tricot obtenu est un aspect normal, où les mailles sont équilibrées (ici, un tricot jersey).

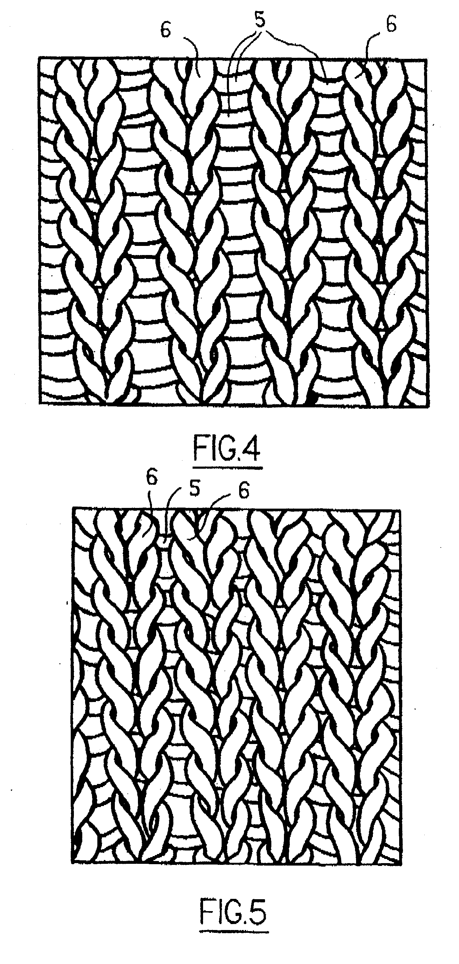

Dans la figure 2, qui représente le tricotage déjaugé classique avec une aiguille sur deux sur le même métier que la figure 1, on voit que seules travaillent les aiguilles en position A, C, E pour former des mailles 6a, 6c, 6e qui ont sensiblement les mêmes formes que dans la figure 1. Mais du fait de la présence de deux platines entre deux aiguilles qui travaillent (par exemple les platines 4b et 4c entre les aiguilles en position A et C), il se forme entre ces deux platines un inter-maille important 5 qui se voit considérablement sur le tricot formé (cf. figure 4) entre deux colonnes de mailles 6.

Dans la figure 3 qui représente le tricotage conforme à l'invention, le métier des figures 1 et 2 a été transformé en supprimant une platine sur deux (les platines 4b et 4d correspondant aux aiguilles 1 en position B et D qui ne travaillent pas), de sorte qu'il ne reste que les platines 4a, 4c et 4e. De ce fait, lors de la formation des mailles 6 par les aiguilles 1, les mailles ne sont pas gênées par une platine trop proche et peuvent s'élargir de sorte que l'inter-maille 5 et les mailles 6 sont d'une taille comparable et équilibrée comme le montre l'aspect du tricot obtenu (cf. figure 5).

Un exemple précis de réalisation va maintenant être décrit.

Un métier circulaire Santoni SM8 15"est équipé dans son équipement d'origine de 1344 aiguilles d'épaisseur 0,41 mm jauge 28 pour un tricotage avec toutes les aiguilles. On a tricoté des tubes avec un fil de polyamide 66 2 bouts, de 110 dtex 34 brins texturés, sur toutes les chutes, sur une base d'extension en largeur de 82 cm préfixé (par exemple stabilisé à la vapeur) mesuré sous 4,3 kg. De ce fait la longueur de fil absorbée sous une tension de 5 g est de 4,50 m par tour de cylindre. Les tubes ainsi tricotés sur une base de 800 rangées permettent de définir les paramètres d'origine : l'aspect régulier du tricot, la consommation de fil, le temps de tricotage, la longueur de fil absorbée par tour, la largeur du tube à plat, sa volumétrie sous une force de 6 kg et le poids au m². Ces paramètres sont indiqués dans la colonne correspondante du tableau I annexé.

Sans changer les réglages mécaniques de la machine, on a tricoté des tubes en déjaugé une aiguille sur deux, donc avec 672 aiguilles et les paramètres correspondants sont reportés sur le tableau I.

Enfin, on a modifié la machine en enlevant une platine sur deux, et, pour compenser l'absence d'une platine sur deux, on a changé le ressort circulaire qui entoure la couronne de platines et les pousse vers le centre du cylindre d'aiguilles, en prévoyant un ressort légèrement plus petit que le ressort normal, par exemple en mettant un ressort de machine 14" (35,5 cm) pour la machine 15" (38,1 cm) dont une platine sur deux a été retirée. Les paramètres sont également reportés sur le tableau I.

La comparaison des trois modes de tricotage dans le tableau I montre que la largeur du tube fixé à plat, pour le tricot suivant l'invention, est plus faible et que le poids au m² est compris entre celui des deux autres modes. Ceci permet de confirmer ce qu'indique l'aspect visuel du tricot obtenu, à savoir que le tricot est mieux équilibré qu'un tricot obtenu par diminution d'aiguilles seulement.

Comme pour un article en déjaugé classique, le fait de tricoter conformément à l'invention diminue l'épaisseur du tricot, mais ceci peut être compensé en augmentant la grosseur du fil utilisé dans le rapport du poids au m² mesuré.

La préparation du métier transformé selon l'invention prend, par exemple, environ 8 heures de travail pour une technicien ; elle est donc nettement plus rapide que la méthode consistant à changer complètement le cylindre de la machine.

**TABLEAU I**

| Sur une base de 800 rangées | Tricotage avec équipement d'origine 1344 aiguilles | Tricotage avec métier déjaugé une aiguille sur 2, soit 672 aiguilles | Tricotage suivant l'invention |
|---|---|---|---|
| consommation de fil | 90,63 g | 59,75 g | 55,29 g |
| temps de tricotage | 2 mn 21 s | 2 mn 21 s | 2 mn 21 s |
| longueur de fil absorbée par tour de cylindre | 4,50 m/t | 2,65 m/t | 2,57 m/t |
| largeur du tube préfixé à plat | 49,5 cm | 33 cm | 30 cm |
| hauteur du tube préfixé à plat | 43,5 cm | 45 cm | 42 cm |
| extension tube préfixé | 82 cm | 63 cm | 58 cm |
| volumétrie tube préfixé | 62 cm | 84 cm | 75 cm |
| poids au m2 du tricot | 176 g | 152 g | 165 g |
| pour une même hauteur de tube préfixé à plat | gain en consommation de fil | 36 % | 37 % |
| | gain en temps de tricotage | 4 % | 3 % |
| pour une même volumétrie tube préfixé | gain en consommation de fil | 51 % | 50 % |
| | gain en temps de tricotage | 26 % | 17 % |

## Revendications

1. Procédé de tricotage au déjaugé d'un article textile dans un métier du type à mailles cueillies comportant des aiguilles (1) séparées par des platines (4), du type selon lequel on tricote l'article avec une aiguille (1) sur deux, **caractérisé en ce qu'**on a préalablement retiré du métier une platine (4) sur deux.

2. Article de tricot, **caractérisé en ce qu'**il a été obtenu par un procédé selon la revendication 1.
